# EUROPÄISCHE PATENTSCHRIFT

(11) **EP 2 159 959 B1**
(45) Veröffentlichungstag und Bekanntmachung des Hinweises auf die Patenterteilung: **19.06.2013**
(21) Anmeldenummer: 08015041.0
(22) Anmeldetag: 26.08.2008
(51) Int. Cl.: H04L 12/24

(54) **Verfahren zur Ermittlung einer Topologie, Netzwerkkomponente und Zentraleinheit**
Method for calculating a topology, network components and central unit
Procédé de détermination d'une topologie, composants de réseau et unité centrale

(43) Veröffentlichungstag der Anmeldung: 03.03.2010
(73) Patentinhaber: Siemens Aktiengesellschaft, 80333 München (DE); PHOENIX CONTACT GmbH & Co. KG, 32823 Blomberg (DE)
(72) Erfinder: Imtiaz, Jahanzaib, 32657 Lemgo (DE); Jasperneite, Jürgen, Prof., 32839 Steinheim (DE); Lessmann, Gunnar, 33039 Nieheim (DE); Weber, Karl, Dr., 90518 Altdorf (DE)
(74) Vertreter: Blumbach Zinngrebe

(56) Entgegenhaltungen:
- EP-A- 1 780 943
- US-A- 5 297 138
- US-A1- 2002 048 263
- SCHUMACHER ET AL: "A new approach for increasing the performance of the industrial Ethernet system PROFINET" 2008 IEEE INTERNATIONAL WORKSHOP ON DACTORY COMMUNICATION SYSTEMS, 21. Mai 2008 (2008-05-21), XP002511594

## Beschreibung

Die Erfindung betrifft ein Verfahren zur Ermittlung einer Topologie eines aus Komponenten aufgebauten Datennetzwerkes mit einer Zentraleinheit, einer Anfangskomponente und zumindest einer Endkomponente. Unter der Topologie versteht man die Art, wie verschiedene beteiligte Komponenten, insbesondere Netzwerkkommunikations-Komponenten, im Datennetzwerk durch physische oder logische Leitungswege verbunden sind. In dem Datennetzwerk gibt es Verbindungen und Knoten, über die man gegebenenfalls über Verzweigungen von jedem Bereich des Datennetzwerks zu jedem anderen Bereich des Datennetzwerks kommen kann. Des Weiteren betrifft die Erfindung eine Netzwerkkomponente, umfassend zumindest einen ersten Ein-/Ausgangsport für eine Vorgängerkomponente und einen zweiten Ein-/Ausgangsport für eine Nachfolgerkomponente, und ein Überwachungsmittel zur Überwachung eines Telegramms.

Des Weiteren betrifft die Erfindung eine Zentraleinheit zum Anschluss an ein Datennetzwerk mit einer Anfangskomponente und zumindest einer Endkomponente.

Wie in der Veröffentlichung von M. Schumacher, J. Jasperneite, K. Weber "A new Approach for Increasing the Performance of the Industrial Ethernet System PROFINET" in: 7th IEEE International Workshop on Factory Communication Systems (WFCS 2008), Dresden, Germany, Mai 2008, beschrieben, ist bereits ein Verfahren zur Strukturierung bzw. zur automatischen Adressvergabe für Netzwerkkomponenten in einem Datennetzwerk bekannt. Dazu ist vorgesehen, dass den Netzwerkkomponenten ein Alias, also eine Bezeichnung nach Art einer Adresse, insbesondere ein Alias neben ihrer Netzwerkadresse, also z.B. eine IP-Adresse, oder eine MAC-Adresse, zugeordnet ist oder wird, welche Aufschluss über eine hierarchische Position der Netzwerkkomponente in dem Datennetzwerk gibt.

Nachteilig an diesem Verfahren ist es, dass somit zwar ein beliebiges Netzwerk mit einer beliebigen Anzahl von Netzwerkkomponenten konfiguriert und dadurch jeder Netzwerkkomponente eine eindeutige Adresse zugeordnet werden kann, aber durch das verfahren gelangt der Anwender nicht zu einer Beschreibung der Topologie des so konfigurierten Netzwerks. Beispielsweise ist ein bestehendes, mit Adressen konfiguriertes Netzwerk vorhanden und an dieses Netzwerk wird ein zweites Netzwerk, insbesondere eine Echtzeit-Ethernet-Domaine, angeschlossen, so ist es dem Anwender für dieses Netzwerk nicht mehr möglich, eine Aussage über die Topologie des so entstandenen Gesamtnetzwerks zu machen.

Daher ist es die Aufgabe der Erfindung, ein Verfahren zur Ermittlung einer Topologie für ein Datennetzwerk anzugeben.

Aus der EP 1 780 943 A1 ist ein Verfahren zur Bestimmung einer Layer-2-Topologie einer IT Infrastruktur mit verschalteten Geräten, die über Ports miteinander in Verbindung stehen, bekannt. Hierbei wird für jede einzelne Komponente oder jedes Gerät überprüft, welche unmittelbaren oder mittelbaren "Nachbarkomponenten" diese über welche Ports erreichen kann, wobei zunächst eine PIN-Abfrage durchgeführt wird, um festzustellen, welche Komponenten überhaupt im Datennetz vorhanden sind. Anschließend überprüft jede einzelne angeschlossene Komponente, welche Nachbarkomponente über welche Ports erreichbar sind. Ein diesem ähnliches Verfahren wird in US 5 297 138 beschrieben. Dort wird zunächst ermittelt, welche Komponenten grundsätzlich vorhanden sind. In einem weiteren Schritt wird festgestellt, über welche Ports einer Komponente, welche Nachbarkomponenten unmittelbar oder mittelbar hörbar sind. Anschließend wird eine Komponente aus einer Gruppe, die über einen gemeinsamen Port hörbar ist, ausgewählt und basierend wiederum auf dieser Komponente geprüft, welche Nachbarkomponenten über welche Ports der auswählten Komponente hörbar sind.

Gemäß Erfindung wird die Aufgabe durch ein Verfahren nach Anspruch 1 gelöst. Demgemäß wird für ein aus Komponenten aufgebautes Datennetzwerk mit einer Zentraleinheit, einer Anfangskomponente und zumindest einer Endkomponente, in einem ersten Schritt i) ausgehend von einer Endkomponente in einer Linie einer Ebene eine Endposition in einen Datenbereich eines Telegramms geschrieben, in einem zweiten Schritt ii) dieses Telegramm in Richtung der Anfangskomponente zur Zentraleinheit übermittelt, und in einem dritten Schritt iii) in der Zentraleinheit anhand des Datenbereichs die Topologie des Datennetzwerks ermittelt.

Im einfachsten Fall besteht das genannte Datennetzwerk aus einer Anfangskomponente und einer Endkomponente, wobei die Endkomponente vorzugsweise eine eindeutige Adresse aufweist. Die Endkomponente ist dadurch charakterisiert, dass die nur mit einer Vorgängerkomponente verschaltet ist. Diese beiden Netzwerkkomponenten bilden eine Linie bestehend aus der Anfangskomponente und der dahintergeschalteten Endkomponente. In dieser Linie hat dann vorzugsweise die Anfangskomponente die Stationsadresse bzw. Position "eins" und die Endkomponente die Stationsadresse bzw. Position "zwei". Die Position "zwei" entspricht damit der Endposition, wobei verfahrensgemäß diese Endposition in einen Datenbereich eines Telegramms geschrieben wird und über die Anfangskomponente zur Zentraleinheit übermittelt wird. Für diesen einfachen Fall wird die Topologie als eine Linie aus zwei Elementen beschrieben. Mit diesem Verfahren kann auf vorteilhafte Weise eine Beschreibung einer Topologie eines Netzwerks mit einem Minimum an Daten und einer systematischen Weiterleitung zu einer Zentraleinheit realisiert werden. Das Verfahren endet, wenn eine Endposition erreicht ist, d.h. wenn kein weiterer Knoten angeschlossen ist oder der Knoten nicht an dem Verfahren teilnimmt.

Weiterhin wird in dem zuvor genannten Schritt i) geprüft, ob die Endkomponente eine Verzweigung in eine weitere Linie einer weiteren Ebene aufweist und bei Vorhandensein einer Verzweigung eine Verzweigungsposition in den Datenbereich geschrieben wird und für die weitere Linie das Verfahren mit Schritt i) fortgesetzt wird. Die Datennetzwerke sind in hierarchischen Linientopologien aufgebaut. Bei diesen hierarchischen Linientopologien besteht das Datennetzwerk aus mehreren Ebenen. In den Ebenen können mehrere Linien vorhanden sein, wobei eine Linie durch eine Hintereinanderschaltung von zumindest zwei Netzwerkkomponenten gebildet wird. Beispielsweise kann sich eine Linie in einer ersten Ebene des Datennetzwerks befinden und von einer Komponente der ersten Linie in der ersten Ebene eine Verzweigung in eine weitere Ebene, welche der ersten Ebene hierarchisch untergeordnet ist, vorhanden sein. Durch das Verfahren kann somit vorteilhaft ein Netzwerk mit vorzugsweise einer beliebigen Verschachtelungstiefe aufgrund der ermittelten Endpositionen und der ermittelten Verzweigungspositionen topologisch beschrieben werden.

Weiterhin wird in Schritt ii) bei Passieren des Telegramms von weiteren Komponenten in der Linie jeweils geprüft, ob die jeweilige Komponente eine Verzweigung in eine weitere Linie einer weiteren Ebene aufweist und bei Vorhandensein einer Verzweigung eine Verzweigungsposition in den Datenbereich geschrieben und für die weitere Linie das Verfahren mit Schritt i) fortgesetzt. Das Telegramm, welches auf dem "Rückweg" zur Zentraleinheit ist, und bereits in seinem Datenbereich Endpositionen und Verzweigungspositionen aufweist, kann auf diesem Rückweg durch Passieren der Komponenten erneut auf eine Komponente mit einer Verzweigungsposition treffen und diese Verzweigungsposition der Komponente wird dann zusätzlich in den Datenbereich geschrieben und beschreibt dadurch die erweiterte Topologie. Da im Gegensatz zu einer Komponente ohne Verzweigungspunkt das Telegramm nicht sofort weitergeleitet wird, sondern in die Verzweigung eindringt und die weitere Topologie nach dieser Verzweigung untersucht und mit entsprechenden Strukturdaten der unterlagerten Linie bzw. Topologie nach diesem Verzweigungspunkt zu der Komponente zurückkehrt, kann auf vorteilhafte Weise die gesamte Topologie des Netzwerks beschrieben werden.

Bei dem Verfahren wird, um eine bestimmte Geschwindigkeit zu gewährleisten sowie Ressourcen zu schonen, der Datenbereich durch Hinzufügen der jeweiligen Endposition und der jeweiligen Verzweigungsposition zu einer Zeichenkette mit variabler Länge anwachsen.

Um das spätere Wiederauffinden der Positionen bzw. das Zuordnen zu einer Struktur zu erleichtern, wird hinter eine Verzweigungsposition in der Zeichenkette ein Trennzeichen, welches einen Wechsel in eine andere Ebene beschreibt, hinzugefügt. Die Zeichenkette besteht dabei beispielsweise aus einem Byte-String, wobei jedes Byte jeweils eine Position aufnehmen kann und ein Byte zwischen den Positionen beispielsweise für ein Trennzeichen, vorzugsweise eine Klammer, genutzt werden kann. Das Zeichen "(" bedeutet also: es folgt jetzt eine Reihe von Zeichen, welche jeweils wieder Endpositionen und Verzweigungspositionen zu der übergeordneten Netzwerkkomponente mit einer Verzweigung aufweist. Bevorzugt wird die Topologie für ein industrielles Datennetzwerk von Feldgeräten in der Automatisierungstechnik ermittelt. Durch den zunehmenden Einsatz der Ethernet-Technologie in der Automatisierungstechnik werden zunehmend Domainen von Feldgeräten flexibel zu bereits bestehenden Netzwerktopologien hinzugeschaltet/ beispielsweise bei der Anpassung einer Werkzeugstraße an geänderte Fertigungsbedingungen.

Die Methode erlaubt die Einbindung einer Ethernet-Echtzeit-Domaine in ein Ethernet-System und die Erkennung der damit entstandenen neuen Grenzen. Es ist mit minimalem Aufwand realisierbar und erlaubt einen Hochlauf eines Systems in einer kurzen Zeit. Damit kann auch bei Veränderung der Topologie in angemessener Zeit reagiert werden.

Weiterhin wird die Aufgabe durch die Zentraleinheit zum Anschluss an ein Datennetzwerk mit einer Anfangskomponente und zumindest einer Endkomponente, gemäß Anspruch 3 dadurch gelöst, dass Ermittlungsmittel vorhanden sind, welche dazu ausgestaltet sind, ein Verfahren zur Ermittlung einer Topologie nach den Ansprüchen 1 bis 2 durchzuführen.

Eine derartige Zentraleinheit ist dabei vorzugsweise mit Aufbereitungsmitteln zur Darstellung der Topologie auf einem Display oder zur Weiterleitung der strukturierten Topologie-daten an einen Leitrechner ausgestaltet.

Weitere Vorteile und Ausgestaltungsvarianten sind der Beschreibung und den Figuren der Zeichnung zu entnehmen.

Nachfolgend wird ein Ausführungsbeispiel der Erfindung anhand der Zeichnung näher erläutert, dabei sind einander entsprechende Gegenstände oder Elemente in allen Figuren mit den gleichen Bezugszeichen versehen.
Es zeigen:
- FIG 1: das Prinzip der Topologieermittlung anhand eines einfachen Datennetzwerks,
- FIG 2: eine Topologieermittlung anhand eines Datennetzwerks mit mehreren Ebenen und mehreren Linien, und
- FIG 3: ein Telegramm.

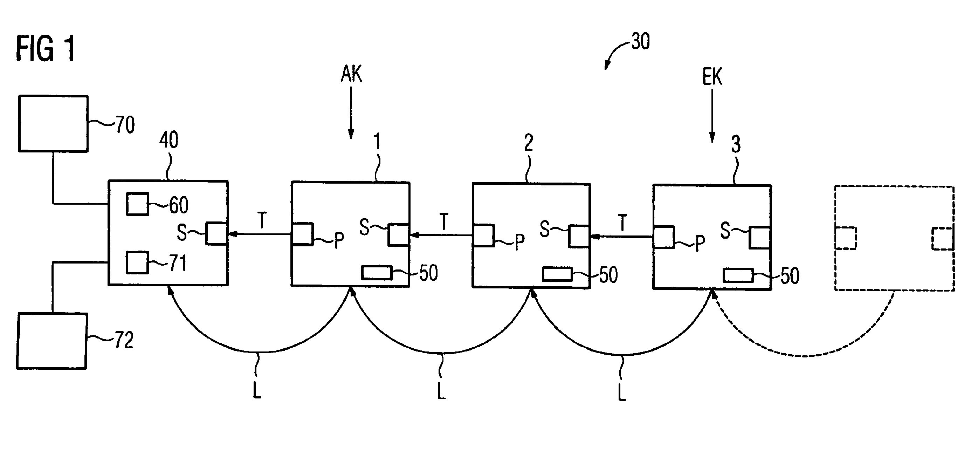

Gemäß Figur 1 ist ein Datennetzwerk 30 mit einer ersten Komponente 1, welche auch eine Anfangskomponente AK darstellt, einer zweiten Komponente 2 und einer dritten Komponente 3 dargestellt. Stellvertretend für die anderen Komponenten 2, 3 wird zunächst am Beispiel der ersten Komponente 1 der Aufbau einer solchen Komponente erklärt. Zur Kommunikation der ersten Komponente 1, welche auch als Netzwerkkomponente bezeichnet wird, weist die Netzwerkkomponente einen ersten Ein-/Ausgangsport P und einen zweiten Ein-/Ausgangsport S auf. Über den ersten Ein-/Ausgangsport P wird die Netzwerkkomponente mit einem Vorgänger über ein Ethernetkabel verschaltet. In diesem Beispiel ist der Vorgänger von der Netzwerkkomponente 1 eine Zentraleinheit 40. Über den zweiten Ein-/Ausgangsport S ist die Netzwerkkomponente 1 mit einer weiteren Netzwerkkomponente, im Beispiel die Netzwerkkomponente 2, verschaltet. Über den ersten und den zweiten Ein-Ausgangsport P, S der Netzwerkkomponente lässt sich somit aus mehreren Netzwerkkomponenten ein Datennetzwerk 30 als eine Linienstruktur aufbauen.

Um nun mit einer an das Datennetzwerk angeschlossenen Zentraleinheit 40 eine Topologie dieses Netzwerkes bestimmen zu können, wird das erfindungsgemäße Verfahren angewendet, wobei einzelne Verfahrensschritte in einem Überwachungsmittel 50 implementiert sind. Das Überwachungsmittel 50 ist dabei als ein frei programmierbarer ASIC-Baustein ausgestaltet. Vorzugsweise besitzt jede Netzwerkkomponente in dem zu analysierenden Datennetzwerk ein Überwachungsmittel 50.
Die Zentraleinheit 40 weist als "Gegenstück" zu dem Überwachungsmittel 50 ein Ermittlungsmittel 60 auf. Mit diesem Ermittlungsmittel 60, welches wiederum vorzugsweise als ein frei programmierbarer ASIC-Baustein ausgestaltet ist, werden die verfahrensgemäß ermittelten Topologiedaten aufbereitet. Über ein Display 70, welches ebenfalls mittels einer Ethernetleitung an der Zentraleinheit 40 angeschlossen ist, können die Topologiedaten bzw. die Topologie des Netzwerkes grafisch dargestellt werden. Des Weiteren ist es möglich, die Topologiedaten zur Weiterverarbeitung an einen Leitrechner 72 über ein Aufbereitungsmittel 71 weiter zu geben.

Unter Zuhilfenahme eines LLDP (Link Layer Discovery Protokoll) in der Zeichnung mit L bezeichnet, wird ein Telegramm T ausgehend von der Endkomponente EK in Richtung der Anfangskomponente AK zur Zentraleinheit 40 gesendet. Rechts von der Endkomponente EK ist symbolisch, gestrichelt eine weitere Netzwerkkomponente eingezeichnet. Diese symbolische Netzwerkkomponente dient zum Einen der Veranschaulichung, dass die aus den Netzwerkkomponenten 1, 2, 3 gebildete Linie prinzipiell beliebig weiterführbar ist und zum Anderen zeigt sie an, dass der zweite Ein-Ausgangsport S der Netzwerkkomponente 3 nicht mehr mit einer weiteren Netzwerkkomponente verbunden ist. Ein von der Zentraleinheit 40 ausgesendetes Ereignis, welches die Topologie des Netzwerkes 30 ermitteln soll, würde somit beim Erreichen der Netzwerkkomponente 3 an den zweiten Ein-Ausgangsport S einen Timeout auslösen. Dieser Timeout ist wiederum ein Signal für das Überwachungsmittel 50, welches dadurch eine Funktion auslöst, dass den Netzwerkteilnehmer analysiert. Wie bereits teilweise in FIG 1 erläutert, verfügt die Netzwerkkomponente über einen ersten Ein-Ausgangsport S, einen zweiten Ein-Ausgangsport P und einen dritten Ein-Ausgangsport P. Der erste Ein-Ausgangsport S und der zweite Ein-Ausgangsport B dienen der Hintereinanderschaltung von mehreren Netzwerkkomponenten zu einer Linie. Der dritte Ein-Ausgangsport B dient der Verbindung von einer hierarchisch höheren Ebene zu einer hierarchisch niedrigeren Ebene, beispielsweise eine Verbindung von der ersten Ebene E1 zur zweiten Ebene E2.

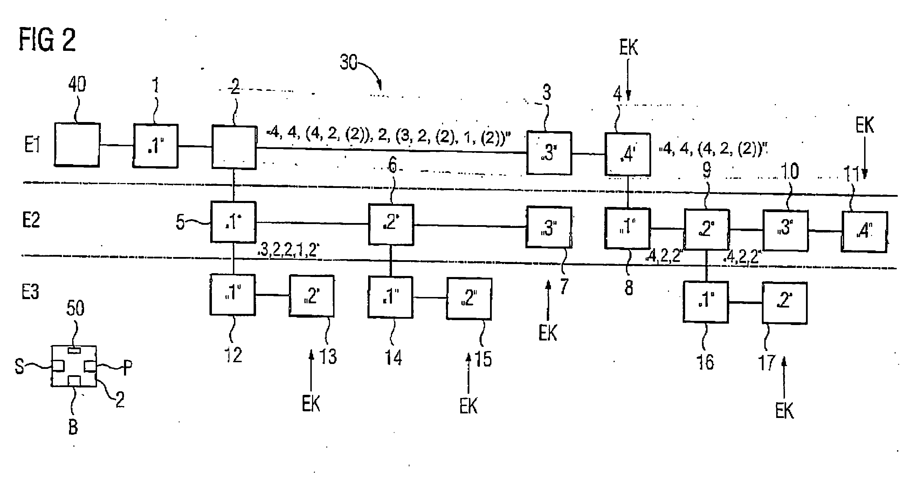

Bezogen auf das Datennetzwerk 30 in FIG 2 weisen die zweite Netzwerkkomponente 2, die vierte Netzwerkkomponente 4, die fünfte Netzwerkkomponente 5, die sechste Netzwerkkomponente 6 und die neunte Netzwerkkomponente 9 jeweils einen dritten Ein-Ausgangsport B zur Verzweigung in eine weitere Ebene auf. Durch die Verzweigungsmöglichkeit der genannten Netzwerkkomponenten können die einzelnen Linien zu dem zusammenhängenden Netzwerk 30 zusammengeschaltet werden. Die zweite Netzwerkkomponente 2 der ersten Ebene E1 ermöglicht dadurch eine Verbindung zu der fünften Netzwerkkomponente 5, welche in der zweiten Ebene E2 liegt. Die vierte Netzwerkkomponente 4 der ersten Ebene E1 ermöglicht aufgrund der Verzweigung eine Verbindung zu der achten Netzwerkkomponente 8, welche ebenfalls in der zweiten Ebene E2 liegt. Weiterhin verbindet die fünfte Netzwerkkomponente 5 aus der zweiten Ebene E2 die zwölfte Netzwerkkomponente 12 aus der dritten Ebene E3. Die sechste Netzwerkkomponente 6 verbindet über ihre Verzweigungsstelle die vierzehnte Netzwerkkomponente 14 aus der Ebene E3.

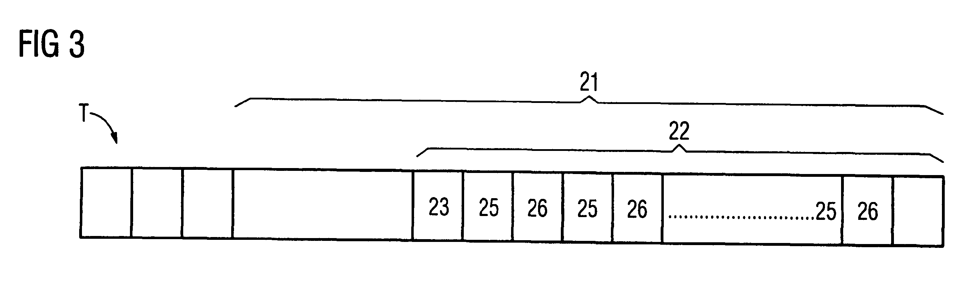

Um eine Topologie des aus den Netzwerkkomponenten 1 bis 17 aufgebauten Datennetzwerkes 30 mit der Zentraleinheit 40 zu ermitteln wird ausgehend von einer Endkomponente EK in der ersten Linie in der erste Ebene E1 die Endposition der Endkomponente EK in einen Datenbereich 22 eines Telegrammes T geschrieben. In der ersten Linie ist die "vierte" Netzwerkkomponente 4 die Endkomponente EK und da sie die vierte Netzwerkkomponente in der ersten Linie ist, hat sie eine Endposition mit der Wertigkeit "vier". Für die FIG 2 gilt, in den Kästen der Netzwerkkomponenten 1 bis 17 sind jeweils in Anführungsstrichen "die Wertigkeiten der Netzwerkkomponenten entsprechend ihres Ranges in der jeweiligen Linie dargestellt. Rechts neben den Kästen der Netzwerkkomponenten mit einer Verzweigungsposition ist als jeweils eine Zeichenhälfte der Aufbau der Positionsdaten dargestellt. Zum Aufbau des Telegrammes T sei vorgreifend auf die FIG 3 verwiesen. Das Telegramm T besitzt neben den, wie es für ein LLDP-Telegramm Standard ist, eine Destination-Adresse, eine Source-Adresse, einen Typ und einen Bereich für Standard TLV's. Ein Bereich 21 bildet dabei einen LLDP-Frame. Als erfindungsgemäßer Vorteil sei der Datenbereich 22 genannt, in welchen die jeweiligen Endpositionen 25 und die Verzweigungspositionen 26 als ein String hintereinander gehängt sind.

Zurück zum Topologieermittlungsverfahren anhand der FIG 2. Die Endposition "vier" der vierten Netzwerkkomponente 4 wurde bereits mit dem ersten Verfahrensschritt in den Datenbereich 22 des Telegrammes T geschrieben und als eine erste Endposition 25 am Anfang des Datenbereiches 22 abgelegt. Jetzt wird weiterhin geprüft, ob die Endkomponente EK, in diesem Fall die vierte Netzwerkkomponente 4 eine Verzweigung in eine weitere Linie einer weiteren Ebene E2 aufweist und bei Vorhandensein dieser Verzweigung wird eine Verzweigungsposition 26 in den Datenbereich 22 geschrieben und für die weitere Linie das Verfahren mit Schritt i.) fortgesetzt. Da die vierte Netzwerkkomponente 4 eine Verzweigung von der ersten Linie aus der ersten Ebene E1 in die zweite Ebene E2 aufweist und damit die erste Linie mit der dritten Linie verbindet, ist die zuvor genannte Prüfung positiv ausgefallen und in den Datenbereich 22 wird an die zuvor eingeschriebene Endposition 25 "vier" eine weitere Verzweigungsposition "vier" angehängt. Es ist also eine Zeichenkette mit dem Inhalt "vier, vier" entstanden, wobei die erste "vier" die Endposition der vierten Netzwerkkomponente 4 in der ersten Linie beschreibt und die zweite "vier" in der Zeichenkette zusätzlich beschreibt, dass diese Netzwerkkomponente 4 auch einen Verzweigungspunkt in einer weiterer Ebene aufweist. Da über diesen Verzweigungspunkt eine weitere Ebene, nämlich die zweite Ebene E2 mit der dritten Linie erreicht wurde, wird rekursionsartig das Verfahren mit Schritt i.) fortgesetzt. Es wird also wiederum ausgehend von einer Endkomponente EK, in diesem Fall die elfte Netzwerkkomponente 11 eine Endposition 25 "vier" in den Datenbereich 22 des Telegramms T geschrieben. Ausgehend von der elften Netzwerkkomponente 11 als Endkomponente in der dritten Linie wird das Telegramm T nun in Richtung der Zentraleinheit 40 übermittelt. Dabei passiert es, die zehnte Netzwerkkomponente 10 ohne eine Aktion einer Positionsaufnahme in den Datenbereich 22, weil die zehnte Netzwerkkomponente 10 keinen Verzweigungspunkt hat. Beim Passieren des Telegramms T der neunten Netzwerkkomponente 9, in der dritten Linie wird nach der jeweiligen Prüfung festgestellt, dass die neunte Netzwerkkomponente 9 eine Verzweigung in eine weitere Linie einer weiteren Ebene aufweist. In diesem Fall führt die Verzweigung von der zweiten Ebene E2 in die dritte Ebene E3. Nach dem zweiten Verfahrensschritt ii.) wird nun die Verzweigungsposition "zwei" in den Datenbereich 22 geschrieben. Da die aus der sechzehnten Netzwerkkomponente 16 und der siebzehnten Netzwerkkomponente 17 aufgebaute Linie zwei Netzwerkkomponenten enthält, also die zweite Netzwerkkomponente dieser Linie wiederum eine Endkomponente EK darstellt und die Wertigkeit "zwei" besitzt, wird verfahrensgemäß in den Datenbereich 22 die Endposition "zwei" geschrieben. Für eine Unterstruktur, welche durch die dritte Linie und die sechste Linie gebildet ist, wurde verfahrensgemäß eine Zeichenkette von "vier, zwei, zwei" als Topologie-Merkmal zusammen gestellt. Zusammen mit der Topologie der ersten Linie in der ersten Ebene E1 ist nun eine Zeichenkette von "vier, vier, (vier, zwei, zwei)" entstanden. Die Zeichen "(", ")" werden in der Zeichenkette als Trennzeichen für einen Ebenenwechsel, also einen Hierarchiewechsel abgebildet.

Verfahrensgemäß wird von der vierten Netzwerkkomponente 4 nun das Telegramm T in Richtung der Zentraleinheit 40 weiter übermittelt und passiert dabei die dritte Netzwerkkomponente 3, da diese Netzwerkkomponente 3 wiederum kein Verzweigungspunkt hat, wird an dem Datenbereich 22 keine Änderung vorgenommen. Bei Eintreffen des Telegrammes T an der zweiten Netzwerkkomponente 2 wird verfahrensgemäß festgestellt, dass die zweite Netzwerkkomponente 2 einen Verzweigungspunkt in eine weitere Linie einer weiteren Ebene aufweist. In diesem Fall ist es wieder ein Ebenenwechsel von der ersten Ebene E1 in die zweite Ebene E2. Verfahrensgemäß wird nun wiederum das Telegramm T an die Endkomponente EK dieser Linie gesendet. Die Endkomponente EK ist in diesem Fall die siebte Netzwerkkomponente 7 mit der Endposition 25 mit der Wertigkeit "drei". Da die sechste Netzwerkkomponente 6 und die fünfte Netzwerkkomponente 5 jeweils eine Verzweigung in eine weitere Linie bzw. in eine weitere Ebene aufweisen, entsteht für die Topologie dieser Unterstruktur eine Zeichenkette mit folgendem Inhalt "drei,zwei,zwei,eins,zwei". Diese Zeichenkette der Unterstruktur wird wiederum an die bereits zuvor beschriebene Zeichenkette der zuvor ermittelten Struktur angehängt und es entsteht somit eine komplette Zeichenkette, welche die Topologie des Datennetzwerkes 30 beschreibt mit dem Inhalt "(4,4,(4,2,2),2,(3,2,2,1,2)".

Das Telegramm T mit dem zuvor genannten Inhalt der Zeichenkette wird nun weiterhin in Richtung Zentraleinheit 40 übermittelt da die erste Netzwerkkomponente 1 keinen Verzweigungspunkt aufweist, wird sich an dem Inhalt der Zeichenkette nichts mehr ändern und die Zeichenkette kann somit durch das Telegramm T in die Zentraleinheit 40 übermittelt werden und zur Auswertung der Topologie dem mit FIG 1 beschriebenen Ermittlungsmittel 60 übergeben werden.

## Patentansprüche

1. Verfahren zur Ermittlung einer hierarchischen Linientopologie eines aus Komponenten aufgebauten Datennetzwerkes (30) mit einer Zentraleinheit (40), einer Anfangskomponente (AK) und zumindest einer Endkomponente (EK),
wobei die Anfangskomponente (AK) mit der Zentraleinheit (40) verbunden ist, und
wobei bei dieser hierarchischen Linientopologien das Datennetzwerk aus mehreren Ebenen (E1 E2, E3) besteht und in den Ebenen mehrere Linien vorhanden sein können, wobei eine Linie durch eine Hintereinanderschaltung von zumindest zwei Netzwerkkomponenten gebildet wird, wobei eine Endkomponente (EK) einer Linie dadurch charakterisiert ist, dass diese in dieser Linie nur mit einer Vorgängerkomponente verschaltet ist,
wobei
i) ausgehend von einer Endkomponente (EK) in einer Linie einer Ebene (E1) eine Wertigkeit einer Endposition (25) dieser Endkomponente (EK) in einen Datenbereich (22) eines Telegramms (T) geschrieben wird, wobei die Wertigkeit dem Rang der Endkomponente in dieser Linie entspricht,
ii) dieses Telegramm (T) in Richtung der Anfangskomponente (AK) und über die Anfangskomponente (AK) zur Zentraleinheit (40) übermittelt wird,
iii) in der Zentraleinheit (40) anhand des Datenbereichs (22) die Topologie ermittelt wird,
wobei
in Schritt i) geprüft wird, ob die Endkomponente (EK) einer Linie eine Verzweigung in eine weitere Linie einer weiteren Ebene (E2) aufweist und bei Vorhandensein einer Verzweigung eine Wertigkeit einer Verzweigungsposition (26) in den Datenbereich (22) geschrieben wird, wobei die Wertigkeit dem Rang der Endkomponente (EK) in der jeweiligen Linie entspricht, und für die weitere Linie das Verfahren mit Schritt i) fortgesetzt wird, wobei
in Schritt ii) bei Passieren des Telegramms (T) von weiteren Komponenten in der Linie jeweils geprüft wird, ob die jeweilige Komponente eine Verzweigung in eine weitere Linie einer weiteren Ebene (E3) aufweist und bei Vorhandensein einer Verzweigung die dem Rang dieser Komponente in der jeweiligen Linie entsprechende Wertigkeit der Verzweigungsposition (26) in den Datenbereich (22) geschrieben wird und für die weitere Linie das Verfahren mit Schritt i) fortgesetzt wird,
wobei der Datenbereich (22)
durch Hinzufügen der Wertigkeiten der jeweiligen Endposition (25) und der jeweiligen Verzweigungsposition (26) zu einer Zeichenkette mit variabler Länge anwächst,
wobei hinter der Wertigkeit der verzweigungsposition in der Zeichenkette ein Trennzeichen, welches einen Wechsel in eine andere Ebene (E1, E2, E3) beschreibt, hinzugefügt wird.

2. Verfahren nach einem der vorherigen Ansprüche, wobei die Topologie für ein industrielles Datennetzwerk (30) von Feldgeräten in der Automatisierungstechnik ermittelt wird.

3. Zentraleinheit (40) zum Anschluss an ein Datennetzwerk (30) mit einer Anfangskomponente (AK) und zumindest einer Endkomponente (EK),
**dadurch gekennzeichnet, dass** Ermittlungsmittel (60) vorhanden sind, welche dazu ausgestaltet sind, ein Verfahren zur Ermittlung einer Topologie nach dem Anspruch 1 oder 2 durchzuführen.

4. Zentraleinheit (40) nach Anspruch 3, wobei Aufbereitungsmittel (70) zur Darstellung der Topologie auf einem Display (70) oder zur Weiterleitung der strukturierten Topologiedaten an einen Leitrechner (72) vorhanden sind.

## Claims

1. Method for determining a hierarchical line topology of a data network (30) built up from components, having a central unit (40), a start component (AK) and at least one end component (EK),
wherein the start component (AK) is connected to the central unit (40), and
wherein in this hierarchical line topology the data network consists of a plurality of levels (E1, E2, E3), and a plurality of lines may be present in the levels,
wherein a line is formed by a series connection of at least two network components, wherein an end component (EK) of a line is **characterised in that** it is connected in this line only to a precursor component,
wherein
i) starting from an end component (EK) in a line of a level (E1) a rating of an end position (25) of this end component (EK) is written into a data region (22) of a telegram (T), wherein the rating corresponds to the rank of the end component in this line,
ii) this telegram (T) is transmitted in the direction of the start component (AK) and via the start component (AK) to the central unit (40),
iii) the topology is determined in the central unit (40) with the aid of the data region (22),
wherein
in step i) a check is made whether the end component (EK) of a line has a branch into a further line of a further level (E2) and, if a branch is present, a rating of a branch position (26) is written into the data region (22), wherein the rating corresponds to the rank of the end component (EK) in the respective line, and for the further line the method is continued with step i), wherein
in step ii) when the telegram is being passed, a respective check is made of further components in the line as to whether the respective component has a branch into a further line of a further level (E3) and, if a branch is present, the rating of the branch position (26), which corresponds to the rank of this component in the respective line, is written into the data region (22) and for the further line the method is continued with step i),
wherein the data region (22) increases by the addition of the ratings of the respective end position (25) and of the respective branch position (26) to a character string of variable length,
wherein behind the rating of the branch position in the character string a separating character, which describes a change into another level (E1, E2, E3), is added.

2. Method as claimed in any one of the preceding claims *[sic]*, wherein the topology is determined for an industrial data network (30) of field devices in automation technology.

3. Central unit (40) for connection to a data network (30) having a start component (AK) and at least one end component (EK),
**characterised in that** determining means (60) are provided which are designed to carry out a method for determining a topology as claimed in claim 1 or 2.

4. Central unit (40) as claimed in claim 3, wherein processing means (70) are provided to depict the topology on a display (70) or to forward the structured topology data to a master computer (72).

## Revendications

1. Procédé de détermination d'une topologie linéaire hiérarchique d'un réseau de données (30) constitué de composants, avec une unité centrale (40), un composant initial (AK) et au moins un composant terminal (EK),
où le composant initial (AK) est relié à l'unité centrale (40), et
où, dans cette topologie linéaire hiérarchique, le réseau de données se compose de plusieurs plans (E1, E2, E3) et plusieurs lignes peuvent être présentes sur les plans, une ligne étant formée par un montage successif d'au moins deux composants de réseau, un composant terminal (EK) d'une ligne étant **caractérisé en ce que** celui-ci n'est couplé qu'à un composant antérieur sur cette ligne,
où
i) à partir d'un composant terminal (EK) sur une ligne d'un plan (E1), une valeur d'une position terminale (25) de ce composant terminal (EK) est écrite dans une plage de données (22) d'un télégramme (T), la valeur correspondant au rang du composant terminal sur cette ligne,
ii) ledit télégramme (T) est transmis à l'unité centrale (40) dans la direction du composant initial (AK) et par l'intermédiaire du composant initial (AK),
iii) la topologie est déterminée dans l'unité centrale (40) à partir de la plage de données (22), où
il est contrôlé à l'étape i) si le composant terminal (EK) d'une ligne présente une ramification vers une autre ligne d'un autre plan (E2), une valeur d'une position de ramification (26) étant écrite dans la plage de données (22) en cas de présence d'une ramification, la valeur correspondant au rang du composant terminal (EK) sur la ligne concernée, le procédé se poursuivant par l'étape i) pour l'autre ligne, où
il est contrôlé à l'étape ii), lors du passage du télégramme (T) depuis d'autres composants sur la ligne, si le composant concerné présente une ramification vers une autre ligne d'un autre plan (E3), la valeur de la position de ramification (26) correspondant au rang de ce composant sur la ligne concernée étant écrite dans la plage de données (22) en cas de présence d'une ramification, le procédé se poursuivant par l'étape i) pour l'autre ligne,
la plage de données (22) croissant de manière à former une chaîne de caractères de longueur variable, par ajout des valeurs de la position terminale (25) respective et de la position de ramification (26) respective,
un caractère séparateur décrivant un passage vers un autre plan (E1, E2, E3) étant ajouté derrière la valeur de la position de ramification dans la chaîne de caractères.

2. Procédé selon la revendication précédente, où la topologie est déterminée par des appareils de champ en technique d'automatisation pour un réseau de données (30) industriel.

3. Unité centrale (40) destinée à être raccordée à un réseau de données (30) avec un composant initial (AK) et au moins un composant terminal (EK),
**caractérisée en ce que** des moyens de détermination (60) sont présents, lesquels sont prévus pour l'exécution d'un procédé de détermination d'une topologie selon la revendication 1 ou 2.

4. Unité centrale (40) selon la revendication 3, où des moyens de préparation (70) sont présents pour la représentation de la topologie sur un écran (70) ou pour la transmission à un ordinateur de commande (72) des données topologiques structurées.
